# FASCICULE DE BREVET EUROPEEN

(11) **EP 2 613 994 B1**
(45) Date de publication et mention de la délivrance du brevet: **15.06.2016**
(21) Numéro de dépôt: 11757373.3
(22) Date de dépôt: 28.07.2011
(51) Int. Cl.: B62D 25/08

(54) **STRUCTURE DE LA PARTIE AVANT DE LA CAISSE D'UN VEHICULE**
STRUKTUR DES FRONTTEILS EINER FAHRZEUGKAROSSERIE
STRUCTURE OF THE FRONT PART OF A VEHICLE BODY

(30) Priorité: 09.09.2010 FR 1057150
(43) Date de publication de la demande: 17.07.2013
(73) Titulaire: Peugeot Citroën Automobiles SA, 78140 Vélizy Villacoublay (FR)
(72) Inventeur: CORDELETTE, Matthieu, F-90140 Bourogne (FR); ZOZZOLI, Gilles, F-90100 Lebetain (FR)
(86) Numéro de dépôt international: PCT/FR2011/051837
(87) Numéro de publication internationale: WO 2012/032237

(56) Documents cités:
- EP-A1- 2 033 879
- DE-A1- 19 928 588
- DE-A1-102004 049 034
- FR-A1- 2 507 549
- US-A1- 2005 067 858

## Description

La présente invention se rapporte à une structure de la partie avant de la caisse d'un véhicule, et à un véhicule équipé d'une telle structure. Le document EP 2 033 879 A1 décrit une structure selon le préambule de la revendication 1.

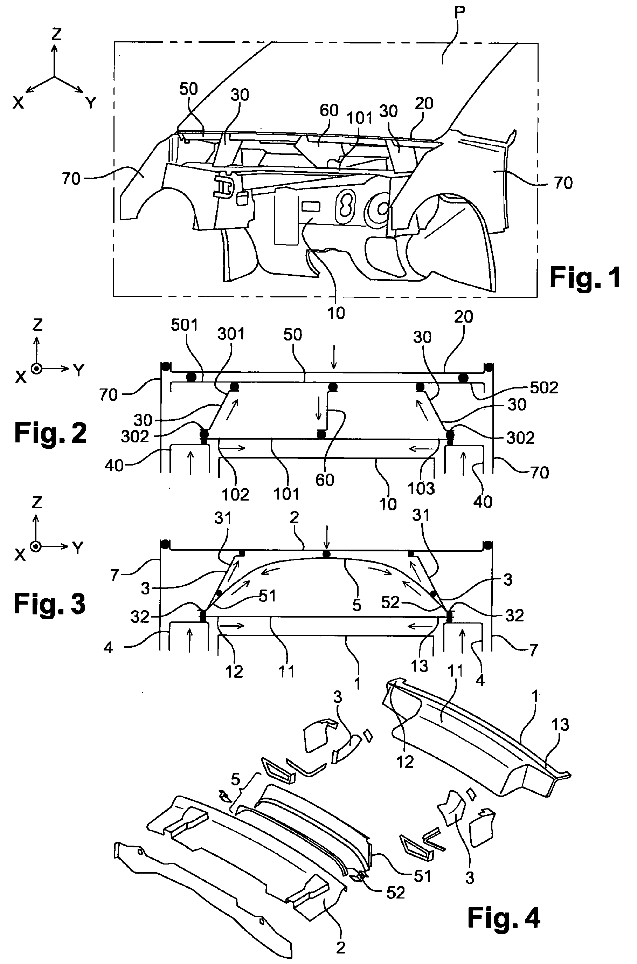

Les figures 1 et 2 représentent une structure connue de la partie avant de la caisse d'un véhicule automobile.

Cette structure comporte :
- un tablier sensiblement transversal destiné à séparer l'habitacle du compartiment moteur du véhicule, et dont une partie supérieure comporte un collecteur d'auvent 10 transversal pourvu d'une doublure 101 supérieure présentant deux extrémités latérales opposées, respectivement droite 102 et gauche 102, et une traverse inférieure de baie 20 sur laquelle la partie inférieure du pare-brise P vient en appui ; et
- deux goussets 30 latéraux, respectivement droit et gauche, présentant chacun deux extrémités opposées, respectivement supérieure 301 et inférieure 302, les extrémités supérieures 301 des goussets 30 étant solidaires de la traverse inférieure de baie 20 et les extrémités inférieures 302 des goussets 30 étant respectivement solidaires, d'une part, de deux supports de suspension 40 et, d'autre part, des extrémités latérales 102, 103 de la doublure 101 du collecteur d'auvent 10.

Comme schématisé sur la figure 2, les extrémités supérieures 301 des goussets 30 sont solidaires de la traverse inférieure de baie 20 via une doublure 50 de la traverse inférieure de baie 20. Cette doublure 50 s'étend transversalement sous la traverse inférieure de baie 20 et est solidaire à ses deux extrémités latérales opposées, respectivement droite 501 et gauche 502, des extrémités supérieures 301 des goussets 30 respectifs..

La traverse inférieure de baie 20 s'étend sur sensiblement toute la largeur du véhicule est fixée rigidement, par soudage, à la doublure 50 de la traverse inférieure de baie 20 et aux doublures 70 des ailes latérales avant, respectivement droite et gauche.

Cette structure comporte en outre une cloison centrale 60 intercalée entre les deux doublures 101 et 50, en étant solidaires de ces deux doublures.

La fixation entre les différents éléments de la structure s'effectue par soudage ; ces soudages étant schématisés par des points sur la figure 2.

Cette structure forme ainsi un auvent cloisonné, dans le sens où il est cloisonné par les deux doublures 101 et 50, par les deux goussets 30 et par la cloison 60, les goussets 30 et la cloison 60 formant des cloisonnements verticaux pour assurer une tenue efficace du pare-brise P et des supports de suspension 40.

Une telle structure pose le problème que les vibrations dues au moteur en fonctionnement et aux efforts en roulage du véhicule produisent comme représenté par les flèches en figure 2 un cheminement des efforts particulièrement défavorable en termes de poids pour la structure.

En effet, bien que chaque pièce de la structure remplisse correctement sa fonction, l'architecture de cette structure conduit à ce que les efforts ont tendance à se focaliser sur certaines pièces :
- la doublure 101 du collecteur d'auvent 10 reçoit les efforts provenant du pare-brise P selon la direction verticale Z, via la cloison centrale 60 et les deux goussets 30, et reçoit également les efforts provenant des supports de suspension 40 selon la direction transversale Y ; et
- les goussets 30 reçoivent les efforts provenant des supports de suspension 40 selon la direction verticale Z.

Pour répondre à ces problèmes, il est donc classique de rigidifier les pièces soumises à ces efforts, en l'occurrence la doublure 101 du collecteur d'auvent 10 et les goussets 30, en les rendant plus épaisses, et donc en les rendant plus lourdes, augmentant ainsi fortement le poids global de la structure et donc du véhicule.

La présente invention selon la revendication 1 a pour but de résoudre ces inconvénients en proposant une structure de la partie avant de la caisse d'un véhicule qui présente une architecture adaptée pour obtenir une répartition équilibrée des efforts, suffisante pour ne pas avoir à alourdir de trop les pièces de la structure.

A cet effet, elle propose une structure de la partie avant de la caisse d'un véhicule, comportant :
- un tablier sensiblement transversal destiné à séparer l'habitacle du compartiment moteur du véhicule, et dont une partie supérieure comporte un collecteur d'auvent transversal présentant deux extrémités latérales opposées, respectivement droite et gauche, et une traverse inférieure de baie sur laquelle la partie inférieure du pare-brise du véhicule est destinée à venir en appui ; et
- deux goussets latéraux, respectivement droit et gauche, présentant chacun deux extrémités opposées, respectivement supérieure et inférieure, les extrémités supérieures des goussets étant solidaires de la traverse inférieure de baie et les extrémités inférieures des goussets étant respectivement solidaires, d'une part, de deux supports de suspension et, d'autre part, des extrémités latérales du collecteur d'auvent ;
   remarquable en ce qu'elle comprend en outre un élément de structure transversal en forme d'arche intercalée entre la traverse inférieure de baie et le collecteur d'auvent, ledit élément de structure étant arquée en direction de la traverse inférieure de baie et présentant deux extrémités latérales opposées, respectivement droite et gauche, solidaires des goussets respectifs.

Ainsi, l'invention propose de se passer de la doublure de la traverse inférieure de baie décrite ci-dessus, et de la remplacer par l'élément de structure transversal en forme d'arche ; cet élément de structure formant ainsi une sorte d'arche ou de pont entre les supports de suspension pour asseoir plus efficacement le pare-brise sur les zones rigides ou raides, et ainsi multiplier les cheminements des efforts pour pouvoir soulager la voie principale, en l'occurrence la zone centrale ou médiane.

De la sorte, cette architecture permet de découpler les cheminements des efforts à l'intérieur de la structure vis-à-vis des raideurs dynamiques aux supports de suspension et de la tenue du pare-brise, afin de pouvoir au final alléger la structure.

Cet élément de structure transversal remplace également la cloison centrale, qui désormais ne s'appuie plus directement sur le collecteur d'auvent, et plus spécifiquement sur la doublure du collecteur d'auvent ; l'élément de structure reprenant une partie de tous les efforts cheminant dans la structure.

Selon une caractéristique, l'élément de structure transversal présente une partie centrale sur laquelle vient en appui la traverse inférieure de baie.

Selon une autre caractéristique, la traverse inférieure de baie est solidaire de la partie centrale de l'élément de structure transversal.

Avantageusement, l'élément de structure transversal comporte deux pièces transversales arquées, réalisées notamment par emboutissage d'une tôle, assemblées et fixées l'une à l'autre.

Ainsi, la réalisation de l'élément de structure transversal est facilitée en assemblant deux pièces distinctes réalisées indépendamment l'une de l'autre.

Dans un mode de réalisation particulier, l'élément de structure transversal est symétrique selon un plan médian longitudinal et vertical.

Dans une réalisation particulière, le collecteur d'auvent comporte une doublure présentant deux extrémités latérales opposées, respectivement droite et gauche, solidaires respectivement des extrémités inférieures des goussets, des extrémités latérales de l'élément de structure transversal et des supports de suspension.

Selon une possibilité de l'invention, les extrémités latérales de l'élément de structure sont fixées solidairement sur toute la hauteur des goussets.

L'invention se rapporte également à un véhicule comportant une structure conforme à l'invention.

D'autres caractéristiques et avantages de la présente invention apparaîtront à la lecture de la description détaillée ci-après, d'un exemple de mise en oeuvre non limitatif, faite en référence aux figures annexées dans lesquelles :
- la figure 1, déjà commentée, est une vue schématique en perspective d'une structure connue de la partie avant de la caisse d'un véhicule automobile ;
- la figure 2, déjà commentée, est une vue schématique de face de la structure de la figure 1 ;
- la figure 3 est une vue schématique de face d'une structure conforme à l'invention de la partie avant de la caisse d'un véhicule automobile ;
- la figure 4 est une vue schématique en perspective éclatée de la structure de la figure 3.

Afin de simplifier la description qui va suivre, les figures ont été orientées suivant le système d'axes X, Y, Z définissant l'orientation usuelle d'un véhicule automobile, et dans lequel :
- l'axe X est l'axe longitudinal du véhicule, orienté d'arrière en avant ;
- l'axe Y est l'axe transversal orienté de droite à gauche ; et
- l'axe Z est l'axe vertical orienté du bas vers le haut.

Les termes de position, de direction et d'orientation qui sont utilisés par la suite s'entendent par rapport à ce système d'axes.

Les figures 3 et 4 illustrent une structure conforme à l'invention, formant structure de la partie avant de la caisse d'un véhicule automobile.

Cette structure comporte un tablier sensiblement transversal destiné à séparer l'habitacle du compartiment moteur du véhicule, et dont une partie supérieure comporte :
- un collecteur d'auvent 1 transversal pourvu d'une doublure 11 supérieure présentant deux extrémités latérales opposées, respectivement droite 12 et gauche 13 ; et
- une traverse inférieure de baie 2 sur laquelle la partie inférieure du pare-brise (non illustré) du véhicule est destinée à venir en appui.

La traverse inférieure de baie 2 s'étend sur sensiblement toute la largeur du véhicule, au-dessus de la doublure 11 du collecteur d'auvent 1. Cette traverse inférieure de baie 2 est fixée rigidement, par soudage, aux doublures 7 des ailes latérales avant, respectivement droite et gauche.

Cette structure comporte également deux goussets 3 latéraux, respectivement droit et gauche, présentant chacun deux extrémités opposées, respectivement supérieure 31 et inférieure 32.

Ces goussets 3 sont intercalés sensiblement verticalement entre la traverse inférieure de baie 2 et la doublure 11 du collecteur d'auvent 1. Les extrémités supérieures 32 des goussets 3 sont solidaires de la traverse inférieure de baie 2. Les extrémités inférieures 31 des goussets 3 sont respectivement solidaires, d'une part, de deux supports de suspension 4 et, d'autre part, des extrémités latérales 12, 13 de la doublure 11 du collecteur d'auvent 1.

La structure comporte aussi un élément de structure 5 transversal en forme d'arche intercalée verticalement entre la traverse inférieure de baie 2 et la doublure 11 du collecteur d'auvent 1 et intercalée transversalement entre les deux goussets 3.

Cet élément de structure 5 est arquée en direction de la traverse inférieure de baie 2, autrement dit cet élément de structure 5 est plus proche de la traverse inférieure de baie 2 dans sa partie centrale qu'à ses deux extrémités latérales opposées, respectivement droite 51 et gauche 52. L'élément de structure 5 est ainsi arquée vers le haut.

Les extrémités latérales, respectivement droite 51 et gauche 52, de cet élément de structure 5 sont solidaires des goussets 3 respectifs, en étant fixées solidairement sur toute la hauteur de ces goussets 3.

La fixation entre les différents éléments de la structure conforme à l'invention s'effectue par soudage ; ces soudages étant schématisés par des points sur la figure 3.

Comme schématisé sur la figure 3, l'élément de structure 5 présente une partie centrale sur laquelle vient en appui la traverse inférieure de baie 2, afin que cette traverse inférieure de baie 2 puisse être solidaire, notamment par soudage, de cette partie centrale de l'élément de structure 5.

Comme illustré sur la figure 4, l'élément de structure 5 est réalisé par l'assemblage et la fixation de deux pièces transversales arquées, respectivement avant 51 et arrière 52, réalisées notamment par emboutissage d'une tôle.

Cette structure produit comme représenté par les flèches en figure 3 un cheminement équilibré des efforts particulièrement favorable en termes de poids pour la structure. En effet, l'élément de structure 5 reprend, du fait de sa disposition et de sa forme arquée, une partie de tous les efforts cheminant dans la structure. Cela permet ainsi de pouvoir réduire la raideur des pièces qui sont ainsi soulagées en effort, à savoir le collecteur d'auvent 1, la doublure 11 du collecteur d'auvent 1 et les deux goussets 3.

Il a ainsi été possible, grâce à ce rééquilibrage des cheminements d'effort, d'obtenir un gain d'au moins 1 kilogramme par rapport à une structure classique telle décrite ci-dessus en référence aux figures 1 et 2.

## Revendications

1. Structure de la partie avant de la caisse d'un véhicule, comportant :
- un tablier sensiblement transversal destiné à séparer l'habitacle du compartiment moteur du véhicule, et dont une partie supérieure comporte un collecteur d'auvent (1, 11) transversal présentant deux extrémités latérales opposées, respectivement droite (12) et gauche (13), et une traverse inférieure de baie (2) sur laquelle la partie inférieure du pare-brise du véhicule est destinée à venir en appui ;
- deux goussets (3) latéraux, respectivement droit et gauche, présentant chacun deux extrémités opposées, respectivement supérieure (31) et inférieure (32), les extrémités supérieures (31) des goussets (3) étant solidaires de la traverse inférieure de baie (2) et les extrémités inférieures (32) des goussets (3) étant respectivement solidaires, d'une part, de deux supports de suspension (4) et, d'autre part, des extrémités latérales du collecteur d'auvent (1, 10) ; et
- un élément de structure (5) transversal en forme d'arche intercalée entre la traverse inférieure de baie (2) et le collecteur d'auvent (1, 11), ledit élément de structure (5) étant arquée en direction de la traverse inférieure de baie (2) et présentant deux extrémités latérales opposées, respectivement droite (51) et gauche (52), solidaires des goussets (3) respectifs ;
**caractérisée en ce que** l'élément de structure (5) transversal présente une partie centrale sur laquelle vient en appui la traverse inférieure de baie (2).

2. Structure selon la revendication 1, dans laquelle la traverse inférieure de baie (2) est solidaire de la partie centrale de l'élément de structure (5) transversal.

3. Structure selon l'une quelconque des revendications précédentes, dans laquelle l'élément de structure (5) transversal comporte deux pièces transversales (51, 52) arquées, réalisées notamment par emboutissage d'une tôle, assemblées et fixées l'une à l'autre.

4. Structure selon l'une quelconque des revendications 1 à 3, dans laquelle l'élément de structure (5) transversal est symétrique selon un plan médian longitudinal et vertical.

5. Structure selon l'une quelconque des revendications 1 à 4, dans laquelle le collecteur d'auvent (1) comporte une doublure (11) présentant deux extrémités latérales opposées, respectivement droite (12) et gauche (13), solidaires respectivement des extrémités inférieures (32) des goussets (3), des extrémités latérales (12, 13) de l'élément de structure (5) transversal et des supports de suspension (4).

6. Structure selon l'une quelconque des revendications 1 à 5, dans laquelle les extrémités latérales de l'élément de structure (5) sont fixées solidairement sur toute la hauteur des goussets (3).

7. Véhicule comprenant une structure conforme à l'une quelconque des revendications 1 à 6.

## Patentansprüche

1. Struktur des Frontteils der Karosserie eines Fahrzeugs, die Folgendes umfasst:
- eine Spritzwand, die im Wesentlichen quer ist, die dazu bestimmt ist, die Fahrgastzelle von dem Motorraum des Fahrzeugs zu trennen, und von der ein Oberteil einen Windlaufquerteilsammler (1, 11) umfasst, der zwei seitliche entgegengesetzte Enden, jeweils ein rechtes (12) und ein linkes (13), aufweist, und einen unteren Öffnungsquerträger (2), auf dem der untere Teil der Windschutzscheibe des Fahrzeugs zum Aufliegen kommen soll,
- zwei seitliche Zwickel (3), jeweils ein rechter und ein linker, die jeweils zwei einander entgegengesetzte Enden aufweisen, jeweils ein oberes (31) und ein unteres (32), wobei die oberen Enden (31) der Zwickel (3) fest mit dem unteren Öffnungsquerträger (2) verbunden sind, und die unteren Enden (32) der Zwickel (3) jeweils einerseits mit zwei Aufhängungsträgern (4) und andererseits mit den seitlichen Enden des Windlaufquerteilsammlers (1, 10) fest verbunden sind, und
- ein Strukturquerelement (5) mit Bogenform, das zwischen den unteren Öffnungsquerträger (2) und den Windlaufquerteilsammler (1, 11) eingefügt ist, wobei das Strukturelement (5) in Richtung des unteren Öffnungsquerträgers (2) gewölbt ist und zwei einander entgegengesetzte seitliche Enden, jeweils ein rechtes (51) und ein linkes (52) aufweist, die fest mit den jeweiligen Zwickeln (3) verbunden sind,
**dadurch gekennzeichnet, dass** das Strukturquerelement (5) einen zentralen Teil aufweist, auf dem der untere Öffnungsquerträger (2) zum Aufliegen kommt.

2. Struktur nach Anspruch 1, wobei der untere Öffnungsquerträger (2) fest mit dem zentralen Teil des Strukturquerelements (5) verbunden ist.

3. Struktur nach einem der vorhergehenden Ansprüche, wobei das Strukturquerelement (5) zwei gewölbte Querteile (51, 52) umfasst, die insbesondere durch Tiefziehen eines Blechs hergestellt, zusammengefügt und aneinander befestigt sind.

4. Struktur nach einem der Ansprüche 1 bis 3, wobei das Strukturquerelement (5) entlang einer vertikalen Längsmittenebene symmetrisch ist.

5. Struktur nach einem der Ansprüche 1 bis 4, wobei der Windlaufquerteilsammler (1) eine Auskleidung (11) umfasst, die zwei einander entgegengesetzte seitliche Enden, jeweils ein rechtes (12) und ein linkes (13), aufweist, die jeweils mit den unteren Enden (32) der Zwickel (3), den seitlichen Enden (12, 13) des Strukturquerelements (5) und den Aufhängungsträgern (4) fest verbunden sind.

6. Struktur nach einem der Ansprüche 1 bis 5, wobei die seitlichen Enden des Strukturquerelements (5) fest auf der gesamten Höhe der Zwickel (3) befestigt sind.

7. Fahrzeug, das eine Struktur nach einem der Ansprüche 1 bis 6 umfasst.

## Claims

1. A structure of the front part of a vehicle body, comprising:
- a substantially transverse wall intended to separate the passenger compartment from the engine compartment of the vehicle, and an upper part of which comprises a transverse cowl (1, 11) having two opposite lateral ends, respectively a right end (12) and a left end (13), and a lower recess crossmember (2) on which the lower part of the windscreen of the vehicle is intended to come to rest;
- two side brackets (3), respectively right and left, each having opposite ends, respectively upper (31) and lower (32), the upper ends (31) of the brackets (3) being solidly connected to the lower recess crossmember (2) and the lower ends (32) of the brackets (3) being respectively solidly connected, on the one hand, to two suspension supports (4) and, on the other hand, to the lateral ends of the cowl (1, 10); and
- a transverse structural element (5) in the form of an arch disposed between the lower recess crossmember (2) and the cowl (1, 11), said structural element (5) being arched in the direction of the lower recess crossmember (2) and having two opposite lateral ends, respectively right (51) and left (52), solidly connected to the respective brackets (3);
**characterized in that** the transverse structural element (5) has a central part on which the lower recess crossmember (2) comes to rest.

2. The structure according to Claim 1, in which the lower recess crossmember (2) is solidly connected to the central part of the transverse structural element (5).

3. The structure according to any one of the preceding claims, in which the transverse structural element (5) comprises two arched transverse pieces (51, 52), realized in particular by stamping of a metal sheet, assembled and fixed to one another.

4. The structure according to any one of Claims 1 to 3, in which the transverse structural element (5) is symmetrical along a longitudinal and vertical median plane.

5. The structure according to any one of Claims 1 to 4, in which the cowl (1) comprises a lining (11) having two opposite lateral ends, respectively right (12) and left (13), solidly connected respectively to the lower ends (32) of the brackets (3), the lateral ends (12, 13) of the transverse structural element (5) and the suspension supports (4).

6. The structure according to any one of Claims 1 to 5, in which the lateral ends of the structural element (5) are solidly fixed over the entire height of the brackets (3).

7. A vehicle including a structure according to any one of Claims 1 to 6.
